# EUROPÄISCHE PATENTSCHRIFT

(11) **EP 0 600 227 B1**
(45) Veröffentlichungstag und Bekanntmachung des Hinweises auf die Patenterteilung: **13.03.1996**
(21) Anmeldenummer: 93117461.9
(22) Anmeldetag: 28.10.1993
(51) Int. Cl.: E05D 7/06, F16C 11/06, E05D 5/14

(54) **Raumgelenkiges Kraftwagentürscharnier**
Motor vehicle door ball and socket hinge
Charnière à rotule pour portières de voitures

(30) Priorität: 01.12.1992 DE 4240359
(43) Veröffentlichungstag der Anmeldung: 08.06.1994
(73) Patentinhaber: ED. SCHARWÄCHTER GmbH & Co. KG, D-42809 Remscheid (DE)
(72) Erfinder: Tölle, Karl-Heinz, D-Wuppertal 21 (DE); Franke, Dietmar, Remscheid (DE)
(74) Vertreter: Schön, Theodor, Patent- und Zivilingenieur

(56) Entgegenhaltungen:
- EP-A- 0 451 529
- WO-A-90/14485
- US-A- 2 471 672
- US-A- 3 278 981

## Beschreibung

Die Erfindung bezieht sich auf ein raumgelenkiges Kraftwagentürscharnier, bestehend aus einer ersten am einen Türanordnungsteil, Tür oder Türsäule, anschlagbaren Scharnierhälfte und einer zweiten am anderen Türanordnungsteil anschlagbaren Scharnierhälfte sowie einem als Kugelkopfbolzen ausgebildeten Scharnierstift, der über ein an seinen Kugelkopf angeschlossenes Schaftteil im Scharnierauge der einen Scharnierhälfte befestigt ist und über seinen Kugelkopf raumgelenkig in einer Lagerpfanne des anderen Scharnierauges gelagert ist.

Im modernen Automobilbau werden die Fahrzeugtüren zunächst vermittels ihrer Scharniere an die Rohkarosserie angeschlagen und in diese eingepasst sowie zusammen mit der Rohkarosserie lackiert. Nach dem Lackieren werden die Türen des Fahrzeuges wieder von der Karosserie abgenommen und auf getrennten Fertigungsstraßen komplettiert, während gleichzeitig deren Innenausstattung in die nunmehr türlose Karosserie eingebracht und eingebaut wird. Erst im Rahmen der Endmontage werden die Türen hierbei wieder in die Karosserie eingesetzt. Diese Vorgehensweise zeichnet sich durch den Vorteil einer völlig unbehinderten Montierbnarkeit der Ausstattung zum einen der Karosserie und zum anderen der Türen aus, ist aber mit einer gewissen Problematik hinsichtlich des Wiedereinsetzens der Türen in die Fahrzeugkarosserie behaftet. Dies resultiert aus dem Umstand, daß zum einen das Einrichten der Türen in der Rohkarossie häufig unter einem gewissen Zwang erfogt und daß sich während des Einbrennens der Lackierung häufig innerhalb der Karosserie vorhandene Spannungen lösen, beides Umstände, die zu Fluchtungsfehlern in der Türscharnierachse bzw. daraus resultierenden Toleranzen und damit schließlich zu Einbauungenauigkeiten führen und daher beim Wiedereinsetzen der Türen in die Karosserie zu umständlichen Justierarbeiten führen. Um diese Problematik wenigstens weitgehend zu beseitigen ist bereits mehrfach, z.B. WO-A-90 14485 DE-OS 40 11 909, DE-PS 35 39 276, 35 42 269 der Einsatz raumgelenkig einstellbarer Türscharniere empfohlen bzw. in Betracht gezogen worden.

Tatsächlich kann mit Hilfe raumgelenkig verstellbarer Scharniere die vorstehend aufgezeigte Problematik wenigstens zum überwiegenden Teil beseitigt werden. Die bekannten Bauarten raumgelenkiger Türscharniere eignen sich aber teils wegen ihrer komplizierten und aufwendigen Herstellungsweise und teils wegen ihrer Toleranzen nicht zur Verwendung als Kraftwagentürscharnier.

So ist bei dem aus der DE-OS 40 11 909 bekannten raumgelenkigen Türscharnier für den den Scharnierstift bildenden Kugelkopf eine zweiteilige Kugelpfanne vorgesehen, welche sich dadurch auszeichnet, daß die beiden Teile der Kugelpfanne, Pfanne und überwurfmutter, miteinander verschraubt sein sollen. Abgesehen davon, daß eine solche Verschraubung einen erheblichen Herstellungsaufwand erfordert hängt die Spielfreiheit des montierten Scharnieres jeweils vom Grad der Sorgfalt beim Anziehen der Verschraubung der beiden Teile der Kugelpfanne ab. Ferner müssen hierbei sowohl in der Herstellung als auch in der Montage aufwendige Sicherungsmittel vorgesehen werden, um ein unbeabsichtigtes Auseinanderfallen des Scharnieres im Betrieb auszuschließen.

Bei dem aus der DE-PS 35 39 276 ist der Kugelkopf des Scharnierstiftes zwischen zwei aus Blechpressteilen bestehenden und miteinander verschweißten Halbschalen aufgenommen, wobei die Trennebene der Halbschalen im Kugeläquator liegt. Die Ausbildung einer Kugelpfanne aus Blechpressteilen setzt eine hohe Präzision bei der Herstellung der Blechschalen voraus, kann aber eine für ein Kraftwagentürscharnier hinreichende Spielfreiheit zwischen Kugelkopf und Lagerpfanne, jedenfalls in der Großserie ebenfalls nicht gewährleisten, da sich aus dem nachträglichen Zusammenschweißen der beiden Blechhalbschalen zufallsbedingt mehr oder minder große nachträgliche Verwerfungen ergeben.

Bei solchen Türscharnieren, bei denen der Kugelkopf des Scharnierstiftes in einer aus einem ein- oder auch mehrteiligen Formteil gebildeten Lagerpfanne aufgenommen ist ergibt sich ein sehr hoher Herstellungsaufwand dadurch, daß ein die Lagerpfanne umgebendes Gehäuse oder dergl. nach dem Einsetzen des Kugelkopfes verformt werden muß, um die formschlüßige Verbindung zwischen Kugelkopf und Lagerpfanne herzustellen.

Der Erfindung liegt die Aufgabe zugrunde ein raumgelenkiges Kraftwagentürscharnier zu schaffen, welches auf der einen Seite aus einer kleinstmöglichen Anzahl von mit einem geringstmöglichen Herstellungsaufwand hergestellbaren Einzelteilen besteht und bei hinreichender Festigkeit sowie Toleranzfreiheit auch in Großserie in einfacher Weise zusammengebaut werden kann und welches zudem auf der anderen Seite eine Begrenzung seiner Raumbeweglichkeit aufweist.

Diese Aufgabe wird bei einem Kraftwagentürscharnier der eingangs bezeichneten Bauart erfindungsgemäß im wesentlichen dadurch gelöst, daß die Kugelpfanne den Kugelkopf des Scharnierstiftes bis auf den Anschluß des Schaftteiles vollständig umgreift und daß der Kugelkopf von einer dünnwandigen Lagerschale umgriffen und samt dieser vermittels einer durch ein mehrteiliges Formteil gebildeten Lagerpfanne in einer Scharnieraugenbohrung der zweiten Scharnierhälfte gehalten ist. Die Kontur der Lagerfläche der Kugelpfanne entspricht dabei dem um den Betrag der Dicke der Lagerschale vergrößerten Durchmesser des Kugelkopfes, woraus sich bei kontinuierlichen Konturverlauf der Lagerfläche der Lagerpfanne zwischen dem Schaftteilanschluß dem diesen umgebenden Randbereich der Kugelpfanne ein umlaufender Ringspalt ergibt, der zugleich das Maß der zugelassen Raumbeweglichkeit des Scharnieres bildet, derart, daß die Schwenkbeweglichkeit der Kugelpfanne gegenüber dem Kugelkopf allseitig auf einen Betrag von etwa 5° Schwenkwinkel begrenzt ist. Da bei Kraftwagentürscharnieren eine räumliche Gelenkigkeit ledig während des Einjustierens der Fahrzeugtüre, nicht aber im Betrieb, erforderlich ist, ist ein Ausschlagen im Betrieb nicht möglich und genügt daher die Verwendung einer Ringkante der Kugelpfanne als Begrenzung der Raumbeweglichkeit des Scharnieres.

Das Scharnier ist im übrigen als untrennbares Scharnier ausgeführt und werden daher alle Teile des Scharnires während dessen Zusammenbau unlösbar miteinander verbunden.

Im Einzelnen ist hierzu vorgesehen, daß das mehrteilige, die Kugelpfanne bildende Formteil zweiteilig ausgebildet ist, wobei die Teilungsebene zwischen den beiden Hälften des Formteiles parallel zur Längsrichtung der Scharnieraugenbohrung in der zweiten Scharnierhälfte ausgerichtet ist und wobei die die Kugelpfanne bildenden Formteilhälften einander zu einen zylindrischen Außenumfang ergänzen und das Formteil insgesamt einerseits über einen radial ausladenden Kragen gegen die Unterseite des Scharnierauges abgestützt sowie andererseits gegen die Oberseite des Scharnierauges verspannt ist. Diese Ausgestaltung ermöglich es die beiden Formteilhälften um den mit der Lagerschale versehenen Kugelkopf herumzulegen und zusammen mit dem umfassten Kugelkopf als teilmontierte Einheit in eine als einfache Zylinderbohrung ausgebildete Scharnieraugenbohrung im Scharnierauge der zweiten Scharnierhälfte einzusetzen wobei der umlaufende Kragen zugleich eine Einschubbegrenzung bildet. Die dieserart in die Scharnieraugenbohrung eingesetzte und gegen die untere Stirnfläche des Scharnierauges abgestützte, teilmontierte Einheit kann dann in einer beliebigen Weise durch Verspannen gegen die obere Stirnfläche des Scharnierauges in diesem festgelegt werden.

Eine besonders einfache und sichere Festlegung der teilmontierten Einheit im Scharnierauge der zweiten Scharnierhälfte wird erfindungsgemäß dadurch erreicht, daß die Teile des mehr-, insbesondere zweiteiligen, die Kugelpfanne bildenden Formteils einander oberendig mit einem zapfenartigen Fortsatz ergänzen und die das Forteil aufnehmende Scharnieraugenbohrung stufenförmig abgesetzt ist, derart, daß an einen einen größeren Durchmesser aufweisenden, den die Kugelpfanne umfassenden Abschnitt des Formteiles aufnehmenden Bohrungsabschnitt schnitt ein Bohrungsabschnitt geringeren Durchmessers anschließt, und daß das Formteil insgesamt vermittels seines Fortsatzes gegen die Oberseite des Scharnierauges der zweiten Scharnierhälfte vernietet ist.

Dabei kann in einer weiteren Einzelausgestaltung vorgesehen sein, daß der die Kugelpfanne aufnehmende Bereich des Formteiles mit einer glattflächigen oberen Stirnfläche ausgestattet wähend der diesen Bereich des Formteiles aufnehmende Bohrungsabschnitt der Scharnieraugenbohrung im Scharnierauge eine zu ihrem Grund hin konisch geneigt verlaufende Bodenfläche aufweist.

Das Formteil besteht zweckmäßigerweise aus einem gut vernietbaren Material, insbesondere Spritzguß.

Die auf den Kugelkopf des Scharnierstiftes aufgesetzte, dünnwandige Lagerschale besteht vorteilhaft aus einem abriebfesten Gleitlagermaterial, insbesondere einem Kunststoffmaterial und ist durch überziehen oder evtl. auch Aufspritzen oder Aufwalzen oder dergl. auf dem Kugelkopf angebracht.

Schließlich wird noch ein Merkmal des erfindungsgemäßen Scharnieres darin gesehen, daß der Schaftteil des Scharnierstiftes an einen konisch gestalteten Ansatz anschließend zylindrisch ausgebildet und dem Kugelkopf gegenüberliegend gegen die außenliegende Stirnseite des Scharnierauges der ersten Scharnierhälfte vernietet ist.

Charakteristisch für das erfindungsgemäße Kraftwagentürscharnier ist der Umstand, daß alle Teile jeder Scharnierhälfte mittels Vernietung unlösbar und praktisch toleranzfrei gegeneinander verspannt sind.

Die Erfindung ist in der nachfolgenden Beispielsbeschreibung anhand eines in der Zeichnung dargestellten Ausführungsbeispieles im Einzelnen beschrieben.

In der zeichnung zeigt die
- Figur 1: eine Seitenansicht eines raumgelenkigen Kraftwagentürscharnieres;
- Figur 2: einen Schnitt durch die Scharnieraugen der beiden Scharnierhälften eines raumgelenkigen Kraftwagentürscharnieres.

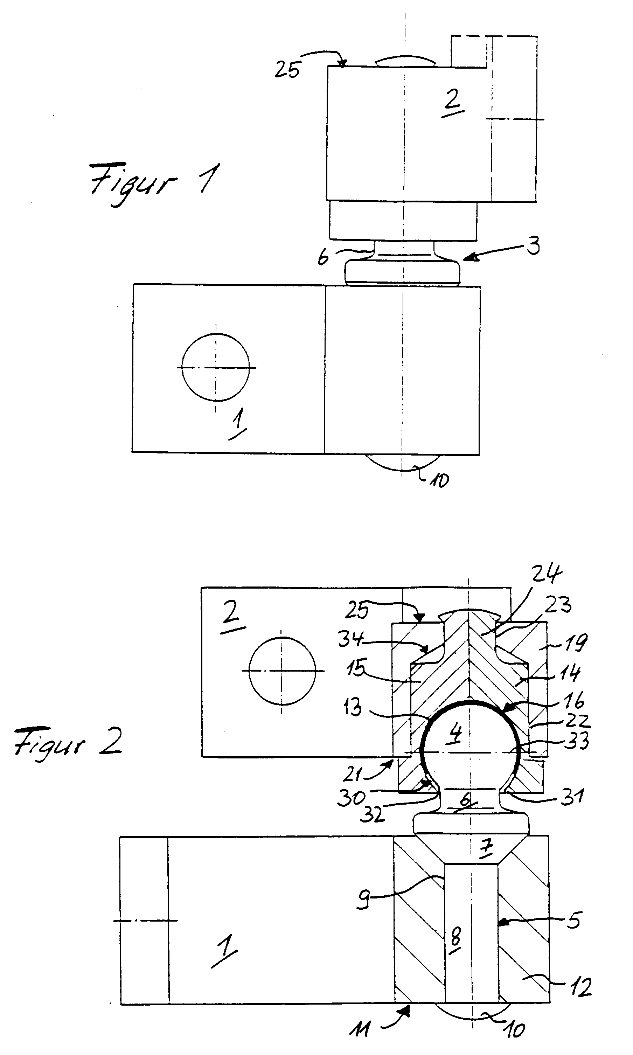

Die beiden Gelenkteile eines aus einer ersten Scharnierhälfte 1 und einer zweiten Scharnierhälfte 2 bestehenden Kraftwagentürscharnieres sind vermittels eines als Kugelbolzen ausgebildeten Scharnierstiftes 3 raumgelenkig miteinander verbunden. Der Scharnierstift 3 besteht dabei aus einem Kugelkopf 4 und einem einteilig an diesen angeschlossenen Schaftteil 5, wobei der Schaftteil 5 an einen den Kugelkopf 4 tragenden Halsteil 6 anschleißend einen konischen Ansatz 7 und an diese anschließend einen zylindrischen Längenabschnitt 8 umfasst. über seinen konischen Ansatz 7 ist der Schaftteil 5 des Scharnierstiftes 4 gegen oberen Bereich einer entsprechend konisch erweiteren Scharnieraugenbohrung 9 in der ersten Scharnierhälfte 1 abgestützt, während er mittels einer Vernietung 10 des freien Endes seines zylindrischen Längenabschnittes 8 gegen die unten liegende Stirnfläche 11 des Scharnierauges 12 der ersten Scharnierhälfte 1 vernietet und somit in der Scharnieraugenbohrung 9 der ersten Scharnierhälfte 1 formschlüssig und unlösbar verspannt ist.

Der Kugelkopf 4 des Scharnierstiftes 3 ist mit einer dünnwandigen Lagerschale 13 überzogen und zusammen mit dieser in einer durch ein zweiteiliges aus einem vernietbaren Material, z.B. Guß oder Spritzguß, bestehenden Formteil 14, 15 gebildeten Kugelpfanne 16 aufgenommen. Die Kugelpfanne 16 umgreift den Kugelkopf nahezu vollständig, wobei der Äquator 33 des Kugelkopfes 4 annähernd in der Ebene der unteren Stirnseite 21 des Scharnierauges 19 der zweiten Scharnierhälfte 2 liegt.

Die Kontur der Lagerfläche 30 der Kugelpfanne 16 entspricht dem um die Dicke der Lagerschale 13 vergrößerten Durchmesser des Kugelkopfes 4, so daß zwischen dem unteren Randbereich 31 des Formteiles 14, 15 und dem Halsteil 6 ein Spaltraum 32 verbleibt, der gleichzeitig den zugelassenen Raumschwenkwinkel des Scharnieres, hier etwa 5° begrenzt. Die Trennebene 17 zwischen den beiden die Kugelpfanne 16 bildenden Hälften 14, 15 des Formteiles ist parallel zur Achse der das Formteil aufnehmenden Scharnieraugenbohrung 18 des Scharnierauges 19 der zweiten Scharnierhälfte 2 ausgerichtet. Das Formteil 14, 15 ist mit einem umlaufenden nach außen auskragenden Kragen 20 versehen, über welchen es an der unteren Stirnseite 21 des Scharnierauges 19 anliegt. Die beiden Hälften 14 und 15 des Formteiles ergänzen einander zu einem zylindrischen Außenumfang, so daß die Scharnieraugenbohrung 18 als einfache Zylinderbohrung gestaltet ist. Die Scharnieraugenbohrung 18 ist im gezeigten Ausführungsbeispiel zugleich auch als Stufenbohrung mit einem ersten das Formteil 14, 15 aufnehmenden Abschnitt 22 größeren Durchmessers und einem zweiten Abschnitt 23 kleineren Durchmessers, welcher von einem an das gleichfalls stufenförmig abgesetzte Formteil 14, 15 angeschlossenen Fortsatz 24 entsprechenden Durchmessers durchgriffen ist. Der die Kugelpfanne 16 aufnehmende Teil des Formteiles 14, 15 ist mit einer glattflächigen oberen Stirnseite 25 versehen, während der den größeren Durchmesser aufweisende Bohrungsabschnitt 22 der Scharnieraugenbohrung 18 zum Bohrungsgrund 34 hin konisch geneigt verlaufend gestaltet ist. über den den Bohrungsabschnitt 23 der Scharnieraugenbohrung 18 durchgreifenden Fortsatz 24 ist das Formteil 14,15 gegen die obere Stirnfläche 26 des Scharnierauges 19 vernietet.

## Patentansprüche

1. Raumgelenkiges Kraftwagentürscharnier, bestehend aus einer ersten am einen Türanordnungsteil, Tür oder Türsäule, anschlagbaren Scharnierhälfte und einer zweiten am anderen Türanordnungsteil anschlagbaren Scharnierhälfte sowie einem als Kugelkopfbolzen ausgebildeten Scharnierstift, der über ein an seinen Kugelkopf angeschlossenes Schaftteil im Scharnierauge der einen Scharnierhälfte befestigt ist und über seinen Kugelkopf raumgelenkig in einer Lagerpfanne des anderen Scharnierauges gelagert ist, dadurch gekennzeichnet, daß die Kugelpfanne (16) den Kugelkopf (4) des Scharnierstiftes (3) bis auf den Anschluß dessen Schaftteiles (6) vollständig umgreift, derart, daß die den Scharnierstiftanschluß (6) umfassende Randkante des Formteiles (14, 15) eine Schwenkbeweglichkeitsbegrenzug der Kugelpfanne (16) dem Kugelkopf (4) gegenüber bildet und daß der Kugelkopf (4) von einer dünnwandigen Lagerschale (13) umgriffen und samt dieser vermittels einer durch ein mehrteiliges Formteil (14, 15) gebildeten Kugelpfanne (16) in einer Scharnieraugenbohrung (18) der zweiten Scharnierhälfte (2) gehalten ist.

2. Kraftwagentürscharnier nach Anspruch 1, dadurch gekennzeichnet, daß das mehrteilige, die Kugelpfanne (16) bildende Formteil (14, 15) zweiteilig ausgebildet und daß die Teilungsebene (17) des Formteiles ( 14, 15) parallel zur Längsrichtung der Scharnieraugenbohrung (18) in der zweiten Scharnierhälfte (2) ausgerichtet ist.

3. Kraftwagentürscharnier nach Anspruch 1 und 2, dadurch gekennzeichnet, daß sich die die Kugelpfanne (16) bildenden Formteilhälften (14, 15) insgesamt zu einen zylindrischen Außenumfang ergänzen und das Formteil (14, 15) einerseits über einen radial ausladenden Kragen (20) gegen die Unterseite (21) des Scharnierauges (19) abgestützt sowie andererseits gegen die Oberseite des Scharnierauges (19) verspannt ist.

4. Kraftwagentürscharnier nach Anspruch 1 bis 3, dadurch gekennzeichnet, daß die Teile des mehr-, insbesondere zweiteiligen, die Kugelpfanne (16) bildenden Formteils (14, 15) einander oberendig mit einem zapfenartigen Fortsatz (24) ergänzen und daß das Formteil (14, 15) insgesamt vermittels dieses Fortsatzes (24) gegen die Oberseite (26) des Scharnierauges (19) der zweiten Scharnierhälfte (2) vernietet ist.

5. Kraftwagentürscharnier nach Anspruch 1 bis 4, dadurch gekennzeichnet, daß die das zweiteilige, die Kugelpfanne (16) bildende Formteil (14, 15) aufnehmende Scharnieraugenbohrung (18) der anderen Scharnierhälfte (2) stufenförmig abgesetzt ist, wobei an einen einen größeren Durchmesser aufweisenden, den die Kugelpfanne (16) umfassenden Abschnitt des Formteiles (14, 15) aufnehmenden Bohrungsabschnitt (22) ein Bohrungsabschnitt (23) geringeren Durchmessers anschließt.

6. Kraftwagentürscharnier nach Anspruch 1 bis 5, dadurch gekennzeichnet, daß der die Kugelpfanne (16) aufnehmende Bereich des Formteiles (14, 15) mit einer glattflächigen oberen Stirnfläche (25) ausgestattet und der diesen Bereich des Formteiles (14, 15) aufnehmende Bohrungsabschnitt (22) der Scharnieraugenbohrung (18) im Scharnierauge (19) eine zu ihrem Grund hin konisch geneigt verlaufende Bodenfläche aufweist.

7. Kraftwagentürscharnier nach einem der Ansprüche 1 bis 6, dadurch gekennzeichnet, daß das Formteil (14, 15) aus einem vernietbaren Material, insbesondere Spritzguß, besteht.

8. Kraftwagentürscharnier nach einem der Ansprüche 1 bis 7, dadurch gekennzeichnet, daß die auf den Kugelkopf (4) des Scharnierstiftes (3) aufgesetzte, dünnwandige Lagerschale (13) aus einem abriebfesten Gleitlagermaterial, insbesondere einem Kunststoffmaterial, besteht und durch überziehen an dem Kugelkopf (4) angebracht ist.

9. Kraftwagentürscharnier nach einem der Ansprüche 1 bis 8, dadurch gekennzeichnet, daß der Schaftteil (5) des Scharnierstiftes (3) an einen konisch gestalteten Ansatz (7) anschließend zylindrisch ausgebildet und dem Kugelkopf (4) gegenüberliegend gegen die außenliegende Stirnseite (11) des Scharnierauges (12) der ersten Scharnierhälfte (1) vernietet ist.

## Claims

1. Motor vehicle door ball and socket hinge, consisting of a first hinge half able to be fastened to a door assembly part, door or door pillar and of a second hinge half able to be fastened to the other door assembly part, as well as of a hinge pin constructed as a ball-headed bolt, which is fastened by way of a shaft part connected to its ball head, in the hinge eye of one hinge half and by way of its ball head is mounted in the form of a ball and socket hinge in a socket of the other hinge eye, characterized in that the ball socket (16) completely surrounds the ball head (4) of the hinge pin (3) as far as the connection of its shaft part (6) so that the marginal edge of the shaped part (14, 15) surrounding the hinge pin connection (6) forms a rotary mobility limitation of the socket (16) with respect to the ball head (4) and that the ball head (4) is surrounded by a thin-walled bearing box (13) and together with the latter is held by means of a socket (16) formed by a multi-part shaped part (14, 15) in a hinge eye bore (18) of the second hinge half (2).

2. Motor vehicle door hinge according to Claim 1, characterized in that the multi-part shaped part (14, 15) forming the socket (16) is constructed in two parts and that the plane of division (17) of the shaped part (14, 15) is aligned parallel with the longitudinal direction of the hinge eye bore (18) in the second hinge half (2).

3. Motor vehicle door hinge according to Claims 1 and 2, characterized in that the shaped part halves (14, 15) forming the socket (16) complement each other to form a cylindrical outer periphery and the shaped part (14, 15) is supported on one side by way of a radially projecting collar (20) against the lower side (21) of the hinge eye (19) and at the other side is braced against the upper side of the hinge eye (19).

4. Motor vehicle door hinge according to Claims 1 to 3, characterized in that the parts of the multi-part, in particular two-part shaped part (14, 15) forming the socket (16) are supplemented at the upper end by a journal-like projection (24) and that the shaped part (14, 15) as a whole is riveted by means of this projection (24) against the upper side (26) of the hinge eye (19) of the second hinge half (2).

5. Motor vehicle door hinge according to Claims 1 to 4, characterized in that the hinge eye bore (18) of the other hinge half (2), receiving the two-part shaped part (14, 15) forming the socket (16), is reduced in a stepped manner, a bore section (23) of smaller diameter adjoining a bore section (22) having a larger diameter and receiving the section of the shaped part (14, 15) comprising the socket (16).

6. Motor vehicle door hinge according to Claims 1 to 5, characterized in that the region of the shaped part (14, 15) receiving the socket (16) is provided with an upper end face (25) having a smooth surface and the bore section (22) of the hinge eye bore (18) in the hinge eye (19) receiving this region of the shaped part (14, 15) comprises a bottom surface extending in a conically inclined manner towards its base.

7. Motor vehicle door hinge according to one of Claims 1 to 6, characterized in that the shaped part (14, 15) consists of a material which can be riveted, in particular die-cast material.

8. Motor vehicle door hinge according to one of Claims 1 to 7, characterized in that the thin-walled bearing box (13) fitted on the ball head (4) of the hinge pin (3) consists of an abrasion-resistant sliding bearing material, in particular a synthetic material and is located on the ball head (4) by being pulled thereover.

9. Motor vehicle door hinge according to one of Claims 1 to 8, characterized in that the shaft part (5) of the hinge pin (3) is constructed cylindrically adjoining a conically shaped shoulder (7) and opposite the ball head (4) is riveted against the external end face (11) of the hinge eye (12) of the first hinge half (1).

## Revendications

1. Charnière de porte orientable dans l'espace pour portes de véhicules automobiles, qui se compose d'une première moitié de charnière pouvant être fixée sur l'une des parties de la porte, à savoir la porte elle-même ou le montant de porte, d'une seconde moitié de charnière pouvant être fixée sur l'autre partie de la porte, et, d'une cheville de charnière constituée d'une cheville à tête sphérique, où ladite cheville de charnière est fixée par sa tige prolongeant la tête sphérique dans le charnon de l'une des moitiés de charnière et sa tête sphérique s'appuie dans une crapaudine de l'autre charnon en étant orientable dans l'espace *caractérisée en ce que* la crapaudine (16) entoure complètement la tête sphérique (4) de la cheville de charnière (3) à l'exception du segment de raccordement (6) avec la tige (5) de celle-ci de sorte que le bord de la pièce façonnée (14), (15) qui entoure le segment de raccordement (6) de la tige (5) avec la tête sphérique (4) constitue une limite à l'orientabilité de ladite tête sphérique (4) par rapport à la crapaudine (16) et *en ce que* la tête sphérique (4) est entourée d'une coquille de support (13) à paroi mince et est retenue ensemble avec ladite coquille (13) dans la crapaudine (16) constituée d'une pièce façonnée (14), (15) en plusieurs parties, disposée dans l'alésage (18) du charnon (19) de la seconde moitié de charnière (2).

2. Charnière de porte selon la revendication 1 *caractérisée en ce que* la pièce façonnée (14), (15) en plusieurs parties formant la crapaudine (16) est constituée de deux parties et *en ce que* le plan de séparation (17) des parties (14), (15) de la pièce façonnée est parallèle à la direction longitudinale de l'alésage (18) du charnon (19) dans la seconde moitié de charnière (2).

3. Charnière de porte selon les revendications 1 et 2 *caractérisée en ce que* les moitiés (14), (15) de la pièce façonnée constituant la crapaudine (16) se complètent pour former une pièce de paroi extérieure cylindrique et *en ce que* ladite pièce façonnée d'une part s'appuie par un collet (20) saillant radialement sur la face inférieure (21) du charnon (19) et d'autre part est fixée par serrage sur la face supérieure dudit charnon (19).

4. Charnière de porte selon les revendications 1 à 3 *caractérisée en ce que* les parties de la pièce façonnée (14), (15) en plusieurs, en particulier en deux parties, qui constitue la crapaudine (16), se complètent à l'extrémité supérieure par un prolongement (24) en forme de tenon et *en ce que* ladite pièce façonnée (14), (15) est rivée par l'intermédiaire de ce prolongement (24) sur la face supérieure (26) du charnon (19) de la seconde moitié de charnière (2).

5. Charnière de porte selon les revendications 1 à 4 *caractérisée en ce que* l'alésage (18) du charnon (19) de la seconde moitié de charnière (2), dans lequel est disposée la pièce façonnée (14), (15) en deux parties constituant la crapaudine (16), présente une forme étagée, un segment d'alésage de plus petit diamètre (23) prolongeant un segment d'alésage de plus grand diamètre (22) dans lequel est logée la partie de la pièce façonnée (14), (15) comprenant la crapaudine (16).

6. Charnière de porte selon les revendications 1 à 3 *caractérisée en ce que* la zone de la pièce façonnée (14), (15) dans laquelle est logée la crapaudine (16) comporte une surface frontale supérieure (25) plane et *en ce que* le segment (22) de l'alésage (18) du charnon (19), dans lequel est logée cette zone de la pièce façonnée (14), (15), présente une forme de cône incliné vers le fond de l'alésage.

7. Charnière de porte selon l'une des revendications 1 à 6 *caractérisée en ce que* la pièce façonnée (14), (15) est en un matériau pouvant être rivé, en particulier en fonte injectée.

8. Charnière de porte selon l'une des revendications 1 à 7 *caractérisée en ce que* la coquille de support (13) à paroi mince entourant la tête sphérique (4) de la cheville de charnière (3) est en un matériau résistant à l'usure, en particulier un matériau synthétique, et est disposée sur la tête sphérique (4) par enduction.

9. Charnière de porte selon l'une des revendications 1 à 8 *caractérisée en ce que* la tige (5) de la cheville de charnière (3) qui présente un segment cylindrique (8) prolongé par un segment conique (7), est rivée à son extrémité opposée à la tête sphérique (4) sur la face frontale extérieure (11) du charnon (12) de la première moitié de charnière (1).
